# EUROPEAN PATENT APPLICATION

(11) **EP 3 879 096 A1**
(43) Date of publication of application: **15.09.2021**
(21) Application number: 19882033.4
(22) Date of filing: 06.11.2019
(51) Int. Cl.: F03D 13/25, B63B 35/44, E02B 17/00

(54) **OPERATIONS VESSEL FOR THE MAINTENANCE, INSTALLATION AND/OR DISASSEMBLY OF OFFSHORE STRUCTURES**

(30) Priority: 07.11.2018 ES 201831070
(71) Applicant: Esteyco SA, 28036 Madrid (ES)
(72) Inventor: SERNA GARCÍA-CONDE, José Salustiano, 28036 Madrid (ES); SARRASÍN GÓMEZ, David, 28036 Madrid (ES)
(74) Representative: Tribalyte Ideas
(86) International application number: PCT/ES2019/070755
(87) International publication number: WO 2020/094901

(57) **Abstract**

The invention relates to an operations vessel for the maintenance, installation and/or disassembly of offshore structures (3), comprising: a hull (1) equipped with ballast means connected to a control system; at least one working platform (4) supported on the hull (1) by means of one or more support elements (5, 5'); and at least one system (8) for coupling to an offshore structure (3), wherein said coupling system (8) can adopt, at least, a state in which it is coupled to said offshore structure (3) and a state in which it is not coupled to said offshore structure (3). Advantageously, the control system and the coupling system (8) are configured in a cooperating manner, in order to adopt at least two working positions of the vessel, wherein the hull (1) adopts an above-water state with the coupling system (8) decoupled, and at least a second working position wherein the hull (1) adopts a submerged state in which the coupling system (8) is coupled to the offshore structure (3).

## Description

### FIELD OF THE INVENTION

The present invention relates to a vessel intended for performing offshore operations and more preferably for the maintenance operations of offshore structures such as wind-driven power generator towers with an anchored, semi-submerged or floating foundation. The main sector of application of the invention is the naval and civil construction industry and particularly the industry for the assembly and maintenance of structures at sea, such as offshore wind turbines.

### BACKGROUND OF THE INVENTION

Offshore structures, and more particularly wind turbines at sea, sometimes need to have their main components, such as blades, generators or multipliers, replaced. These main components can weigh over one hundred tons (for example, in the case of multipliers) or have very considerable dimensions (in the case of the blades). These components are furthermore located at the head of the wind-driven power generator, at heights of up to 150 m above sea level.

To replace the mentioned components, large-sized cranes are required. For these cranes to operate, they need to be completely stationary, so it is not possible to place them on a conventional ship or a barge, because the movement of said vessels caused by the waves prevents the crane from working under suitable conditions.

This problem is generally solved today as a result of the use of large ships, called jack-up vessels (JUV), which are characterized by having telescopic legs with typical lengths of up to 50 m. The ships are positioned next to offshore wind turbines, in the position necessary for performing the crane operations, and deploy long legs which are supported on the seabed. With the legs supported, they raise the ship up until it is completely out of the water and above the level where waves can reach, such that the work is done without the force of the waves generating any significant movement in the working platform of the cranes.

Movement compensation systems based on platforms supported on large hydraulic cylinders are additionally known. In these systems, the movement of the deck of the ship where the cylinders are anchored is detected by means of sensors, the cylinders being moved such that they perform the necessary movements on the working platform, such that the platform is moved with respect to the deck of the ship to counteract the movement of the deck, staying as stationary as possible with respect to the seabed (and therefore with respect to the turbine, which is supported on or driven into the seabed). As of today, these solutions are not as stationary as JUVs, nor are they able to support the large cranes needed to access current and future turbines. Furthermore, they are technically complex.

Lastly, ships for the installation of wind-driven power generators such as, for example, the one described in patent application DE 10332382 A1 are also known. Said application discloses a vessel intended for the transport and installation of an offshore wind-driven power generator. The vessel has a hull with ballast means, a working platform supported on said hull and a system for supporting a semi-submerged wind-driven power generator support. Once coupled to the support, the vessel can be used to facilitate the hoisting of a wind-driven power generator tower equipped with a turbine, from a non-vertical position, for the subsequent hoisting and installation on the support, in a vertical position. Although the ballast means of the hull allow the depth thereof to be adjusted, said adjustment is very limited (just a few meters) and, in any case, keeping the hull of the vessel configured in a substantially submerged state at all times (that is, most of the ballastable hull being located at all times below the waterline). This configuration allows the vessel to be provided with a desirable stability when it is coupled to the support of the wind-driven power generator. However, it represents an important drawback during the steps of transporting the wind-driven power generator at sea and, in general, of displacing the vessel over the water level given that, since most of the ballastable hull remains submerged, its buoyancy is considerably reduced, with the corresponding risk this entails. Likewise, the support elements of this vessel do not constitute a secure coupling to the structure of the wind-driven power generator since, while it can limit some of the translational movements of the vessel during the operations of installation, they do not limit its rotational movements of roll, pitch, and yaw, which also represent a higher risk of instability in situations in which there are high waves.

The present invention is intended for overcoming the limitations and drawbacks of the known floating systems for the maintenance of offshore structures by means of a novel operations vessel and of a method based on said vessel.

### BRIEF DESCRIPTION OF THE INVENTION

To solve the drawbacks of the state of the art described above, the object of the present invention is to provide solutions for offshore transport which allow the performance of operations of maintenance, repair, inspection, or installation in offshore structures to be improved.

Said object of the invention is preferably performed by means of an operations vessel for the maintenance of offshore structures, comprising:
- at least one hull that can be submerged equipped with ballast means, wherein said ballast means are connected to a control system in order to provide to said hull, in an adjustable manner, at least, an above-water state and a submerged state;
- at least one working platform supported on the hull by means of one or more support elements such that, in one or more working positions of the vessel, when said hull adopts a submerged state, said working platform remains above-water and said support elements are partially submerged; and
- at least one system for coupling to an offshore structure, wherein said coupling system can adopt, at least, a state in which it is coupled to said offshore structure and a state in which it is not coupled to said offshore structure.

Advantageously, the ballast control system and the coupling system of the vessel are configured in a cooperating manner, such that:
- in at least a first position of the vessel, the hull adopts an above-water state in which the coupling system is not coupled to the offshore structure and,
- in at least a second position of the vessel, the hull adopts a submerged state in which the coupling system is coupled to the offshore structure.

As a result of the solution proposed by the present invention, the hull of the vessel provides the necessary buoyancy to same, and at the same time allows ballast to be loaded in and unloaded from the interior thereof, preferably by means of intake and pumping seawater or the medium in which it is floating. The hull can thereby adapt its capacity to cause the vessel as a whole to float. Furthermore, the advantage of the first position of the vessel is its considerable stability with respect to the transport thereof, whereas the second position minimizes stresses and movements when working, when loads are being handled for the maintenance of the offshore structure, taking advantage of the stability being ensured by the coupling system.

When the hull is loaded with a ballast in its interior, the vessel loses buoyancy, and this has two consequences: the first is that it reduces the capacity of maintaining stability of the vessel, because the righting thrust decreases. This alone, and in general, is a drawback in any vessel, and this is why ships are designed to always maintain a reserve buoyancy assuring sufficient stability for same. However, there are cargo ships which use this concept to submerge at least part of their decks and to allow being loaded more easily, as well as some ships for transporting other ships, or some floating platforms which work as mobile dry docks, but they are always self-supporting structures. Therefore, they are solutions which differ from the one considered by the present invention.

The advantage of ballasting the ship until its body generating the buoyancy thrust is almost completely submerged is that allows the vessel to be isolated from the vertical movement generated by the waves. In this position, and to prevent the destabilization it causes, the vessel object of invention advantageously has a coupling system which ensures its stability through other means, such as by being fixed to the offshore structure (for example, a wind-driven power generator fixed to the seabed which is to be maintained or repaired). To that end, the vessel will have, for example, one or more arms, having the length necessary for carrying out the tasks defined in each case, with a fixing system for fixing same to said structure, such as a ring, for example, with a closing mechanism which encircles said structure and is able to adjust the level of tightening the fixing on the structure. This fixing system ideally has several working positions, such that it is able to be fixed, but preferably maintaining certain freedom of movement, and adjusted in order to convert that flexible anchoring or articulation into a completely rigid anchoring, according to what is needed at all times.

In a preferred embodiment of the invention, the coupling system comprises safety means adopted for preventing the vessel from decoupling from the offshore structure if the hull is in a submerged state.

In another preferred embodiment of the invention, the ballast control system comprises means for blocking to prevent the ballasting of the hull if the coupling system is decoupled from the offshore structure.

In another preferred embodiment of the invention, the coupling system comprises means for blocking and/or limiting lateral displacement and at least one rotational movement from among the roll, pitch, and yaw of said vessel with respect to the offshore structure.

In another preferred embodiment of the invention, the coupling system comprises means for vertical displacement of said vessel with respect to the offshore structure. The vessel can thereby remain coupled to the offshore structure and vary its height, for example to allow the hull to lower to its submerged state, without the relative position between the hull and the coupling system having to change.

In another preferred embodiment of the invention, the means for vertical displacement comprise means for displacement by sliding and/or skidding.

In another preferred embodiment of the invention, the means for vertical displacement comprise means for blocking and/or limiting said displacement.

In another preferred embodiment of the invention, the means for blocking and/or limiting vertical displacement comprise tightening, engaging, suction, clamping means and/or electromagnetic means.

In another preferred embodiment of the invention, the coupling system comprises an articulated ring configured for opening and closing around at least one element of the offshore structure.

In another preferred embodiment of the invention, the ring comprises an active guide subsystem, configured for tightening said ring against the offshore structure.

In another preferred embodiment of the invention, the vessel is self-supporting when the hull is ballasted in its submerged state.

In another preferred embodiment of the invention, the vessel comprises two or more submergible hulls.

In another preferred embodiment of the invention, the hull comprises one or more leak-tight compartments, and the control system is configured for the selective and adjustable ballasting of said compartments.

In another preferred embodiment of the invention, the working platform comprises a crane. More preferably, the jib of said crane presents telescopic deployment.

In another preferred embodiment of the invention, the working platform comprises one or more surfaces or spaces for stockpiling spare parts or components of the offshore structure, and/or one or more surfaces or spaces for housing power-generating sets.

In another preferred embodiment of the invention, the vessel comprises elevating means for adjustably elevating the working platform with respect to the hull. More preferably, the elevating means comprise a rack and pinion type system, a pin system or other systems known in the art and used for example in vessels with legs, commonly referred to as jack-up vessels.

In another preferred embodiment of the invention, the support elements comprise lattice structures, members and/or legs.

In another preferred embodiment of the invention, the working platform comprises means for anchoring another vessel and/or means for the access of personnel to/from the vessel.

In another preferred embodiment of the invention, the offshore structure is an offshore wind tower. More preferably, the wind tower has a substantially constant section, and/or presents a polygonal section.

In another preferred embodiment of the invention, the offshore structure is a structure supported, moored and/or anchored to the seabed, or is a semi-submerged floating structure. The use of the invention in floating structures is particularly advantageous given that, in this case, in the state in which the coupling system is coupled, the vessel does not present any relative movement in relation to the offshore structure, but it does present absolute movement by being displaced with it, which improves the stability and safety of the operations to be performed.

Another object of the invention relates to a method for the installation, service, or maintenance of offshore structures, using a vessel according to any of the embodiments described herein, and advantageously comprising the performance of the following steps, in any order that is technically possible:
a) displacing the vessel, adopting a first working position with the hull above-water and the coupling system decoupled, to the offshore structure;
b) coupling the vessel to the offshore structure by means of the operation of the coupling system;
c) ballasting the hull, sinking it until adopting a second working position with said hull in a submerged state;
d) performing operations for the installation, service and/or maintenance of the offshore structure from the working platform;
e) deballasting the hull until it again adopts an above-water state;
f) releasing the coupling structure from the offshore structure, returning the vessel to the first working position;
g) withdrawing the vessel from the offshore structure.

In a preferred embodiment of the invention, the method comprises the additional step of adjusting the elevation of the working platform with respect to the hull.

In another preferred embodiment of the invention, the vessel comprises a crane, and the method comprises the additional step of deploying, retracting and/or operating said crane, during step d). More preferably, the crane comprises, at least, a deployed position and a stowed position, wherein the length of the jib of said crane in the stowed position is reduced with respect to the deployed position, and wherein the height of the center of gravity of the crane in the stowed position is less than its height in the deployed position. Even more preferably, the crane is stowed at least during step a) and deployed at least during step d).

In another preferred embodiment of the invention, during step d), the vertical position of the vessel is fixed by means of the coupling system.

In another preferred embodiment of the invention, during step d), the working platform is elevated to a minimum height with respect to the water level greater than half the maximum significant wave height intended and/or allowed for the installation, service, or maintenance of the offshore structure.

In another preferred embodiment of the invention, during step d), the hull is submerged to a minimum depth with respect to the water level greater than half the maximum significant wave height intended and/or allowed for the installation, service, or maintenance of the offshore structure.

In this manner and according to the described embodiments, the vessel object of invention approaches the offshore structure in a normal manner like a conventional vessel does, since the ballasting tanks of the hull thereof are empty, and it therefore has an ensured reserve buoyancy. Next, it elevates the working platform above the support elements, up to the defined height. Then it is secured to the offshore structure, for example, the foundation or the tower of a wind-driven power generator, and once that fixing has been performed which ensures stability of same, the ballast tanks will start to be filled to reduce the intensity of the vertical movement induced by waves.

As the hull of the vessel becomes ballasted, the height thereof above the surface of the sea will gradually be reduced. This will not affect the height of the working platform because the height thereof can be adjusted with respect to the hull, raising the platform through the support elements. The hull will continue to be ballasted in that way up to the maximum buoyancy thrust of the ballasted floating structure, i.e., until the upward thrust provided by the hull, submerged in its entirety, is substantially similar to the total weight of the vessel. At that point, ballast is no longer being incorporated, but the working platform continues to be raised through the support elements connecting said platform to the hull. Given that the platform is fixed to the offshore structure, and since the hull has no further flotation capacity left, the working platform will not be raised but rather the hull will be submerged to even greater depths, but maintaining the thrust compensating for its own weight and the weight of the working platform and the rest of the vessel.

Therefore, the fixing to the previously installed offshore structure will not have to support the entire weight of the structure, or the enormous loads generated by the waves as the vessel moves up and down. It only supports a small fraction of the weight of the vessel (the small difference between the thrust of the submerged floats and the total weight), and supports the loads generated by the instability of the vessel by having submerged the hull. There are other loads that can be very significant caused by the horizontal thrust of the waves on the vessel. However, in order to mitigate them, the length of the support elements connecting the hull with the working platform will preferably be sufficient for being able to submerge the floating structure to a sufficient depth for this thrust to be minimal.

### DESCRIPTION OF THE DRAWINGS

The preceding and other features and advantages will be better understood from the detailed description of the invention, as well as from the preferred embodiments referring to the attached drawings, in which:
- Figure 1 shows the vessel of the invention in a preferred embodiment thereof, wherein the hull of said vessel is in the above-water position.
- Figure 2 shows the vessel of the invention in a preferred embodiment thereof, wherein the hull of said vessel is in the submerged position.
- Figure 3 shows the vessel of the invention in a preferred embodiment thereof, wherein said vessel comprises elevating means for elevating its support elements, and wherein the hull of the vessel is in the submerged position, with its coupling system in the position in which it is not coupled to the offshore structure.
- Figure 4 shows the vessel of the invention in a preferred embodiment thereof, wherein said vessel comprises elevating means for elevating its support elements, and wherein the hull of the vessel is in the submerged position, with its coupling system in the position in which it is coupled to the offshore structure.
- Figures 5a-5g depict different steps of a method for the installation, service, or maintenance of offshore structures according to a preferred embodiment of the invention.

**List of reference numbers of Figures:**

| | |
|---|---|
| (1, 1') | Hull, hull compartments |
| (2) | Water level |
| (3) | Offshore structure |
| (4) | Working platform |
| (5, 5') | Support elements |
| (6) | Crane |
| (7) | Means for access |
| (8) | Coupling system |
| (9) | Articulated ring |

### DETAILED DESCRIPTION OF THE INVENTION

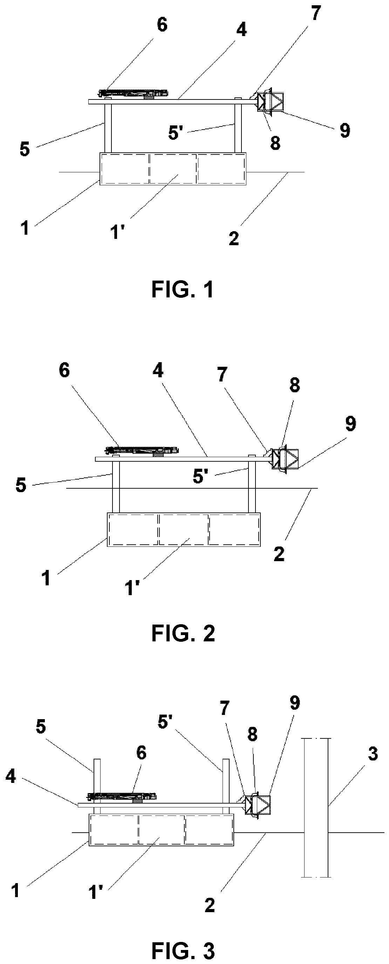

A detailed description of the invention in reference to the different preferred embodiments thereof is described below based on Figures 1-5 herein. Said description is provided for the purposes of illustrating but not limiting the claimed invention.

Figures 1-2 illustrate a general view of the vessel of the invention, wherein said vessel preferably comprises at least one hull (1) that can be submerged, equipped with ballast means which allow the depth of said hull (1) to be regulated by means of the filling or emptying thereof. Water is typically used as ballast, although ballasting materials of another type can also be used in the scope of the invention.

Preferably, the ballast means are connected to a control system which adjusts the ballasting and deballasting operations of the hull (1), by means of the control of the intake or expulsion of ballast in the interior thereof. The ballast control system thereby allows the above-water or submerged state of the hull (1) to be configured in an adjustable manner. In this sense, the vessel of the invention essentially contemplates at least two preferred working states of the hull (1):
- above-water state: in this state, the hull (1) is floating, completely or partially above-water with respect to the water level (2), such that most of the deck of the hull (1) is positioned above the mean water level.
- submerged state: in this state, the hull (1) is substantially below the water level (2), such that at least part of the decks of the hull (1) that are out of water in the above-water state come to be below the mean water level.

In different embodiments of the invention, the vessel can also be self-supporting when the hull (1) is ballasted, in its submerged state. Likewise, the vessel can comprise two (for example, in catamaran-type vessels) or more submergible hulls (1). In other embodiments of the invention, the hull (1) can comprise one or more leak-tight compartments (1'), wherein the control system is configured for the selective and adjustable ballasting of said compartments (1').

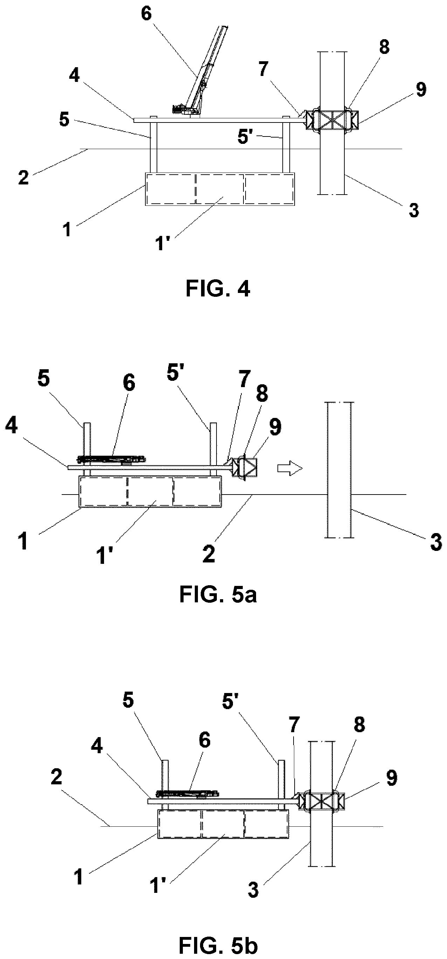

The mentioned above-water and submerged states of the hull (1) allow the vessel of the invention to be effectively adapted to the two general situations in which it will be used, namely, a situation of travelling to/from an offshore structure (3) (which is preferably performed with the hull (1) above-water, like a conventional vessel, as shown in Figure 3), and a situation of operations coupled to the offshore structure (in which the hull (1) will preferably remain submerged, as shown in Figures 2 and 4). In that way, when the corresponding operations in the offshore structure (3) are performed, the hull (1) will be located below the water level (2), thus preventing it from being exposed to waves, which substantially improves its stability and facilitates the performance of the mentioned operations, as well as the transit of personnel between the vessel and the offshore structure (3).

In a preferred embodiment of the invention, the vessel comprises at least one working platform (4) supported on the hull (1) by means of one or more support elements (5, 5') such that, in one or more working positions of the vessel, when said hull (1) adopts a submerged state, said working platform (4) remains above-water and said support elements (5, 5') are partially submerged (this situation is illustrated in Figures 2 and 4).

The working platform (4) of the ship preferably comprises an operations crane (6), suitable for use in maintenance tasks of the offshore structure (3). The improved stability of the ship of the invention as a result of being able to submerge its hull (1) allows cranes (6) which are taller than those used in other maintenance ships of the state of the art to be used, which facilitates performing sizable corrective operations requiring high-capacity external cranes (6). In a preferred embodiment of the invention, the crane (6) is of the telescopic type.

Likewise, in different embodiments of the invention, the working platform (4) can include one or more surfaces or spaces for stockpiling spare parts or components of the offshore structure (3), and/or one or more surfaces or spaces for housing power-generating sets. It is also possible to provide the working platform (4) with anchoring means for anchoring another vessel and/or means for the access (7) of personnel to/from the vessel.

In different embodiments of the invention, the vessel can be self-propelled, towed or a combination, such that it is towed but is able to perform a maneuver when it is close to the offshore structure (3).

Preferably, and as shown in Figures 1-4, the connection between the hull (1) and the working platform (4) provided by the support elements (5, 5') is performed by means of lattice structures, members and/or legs. However, configurations or elements of another type are likewise usable in the scope of the invention, such that they provide an improved stability against waves with respect to that provided by the hull (1) in its above-water state. The support elements (5, 5') will typically have a vertical dimension that is larger than the horizontal dimension.

In a preferred embodiment of the invention (Figures 3-4), the vessel can also incorporate elevating means for adjustably elevating the working platform (4) with respect to the hull (1), wherein said elevating means allow varying the relative height of the platform (4) above the hull (1), for example by means of adjusting the length of the support elements (5, 5'). The elevating means can typically comprise rack and pinion type systems, as well as other mechanical, electrical, pneumatic, or hydraulic elements. Complementarily, the elevating means can comprise means for deploying the support elements (5, 5'), for example by telescoping.

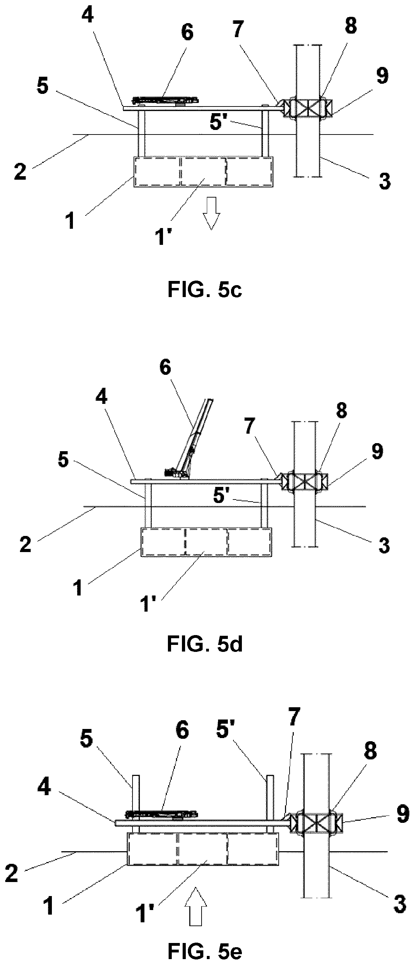

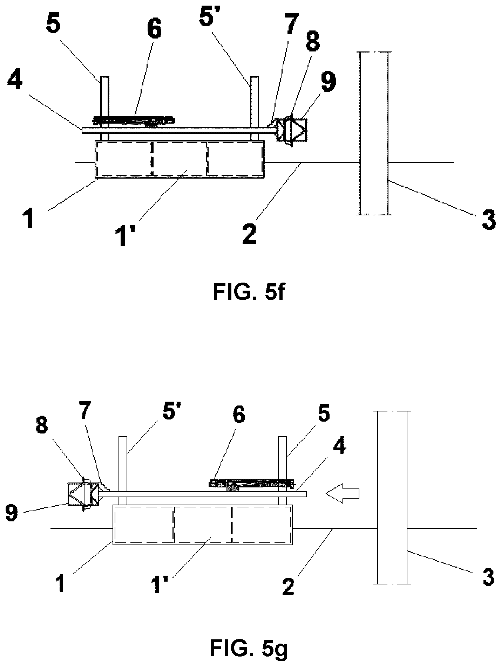

Moreover, and as described in preceding sections, the vessel of the invention comprises, at least, a system (8) for coupling to the offshore structure (3), wherein said coupling system (8) can adopt, at least, a state in which it is coupled to said offshore structure (3) and a state in which it is not coupled to said offshore structure (3). Different embodiments of said coupling system (8), as well as of the mentioned states of being coupled/not being coupled, are shown in Figures 5-8.

The main function of the coupling system (8) is to assure the integral attachment of the vessel to the offshore structure (3) while performing operations on said structure (3). For this purpose, the system can comprise any means intended for that purpose, such as, for example, gripping or holding means based on mechanical, hydraulic, and/or pneumatic elements.

Likewise, in a preferred embodiment of the invention, the coupling system (8) can comprise means for vertical displacement of said vessel with respect to the offshore structure (3). Said means for vertical displacement are preferably based on means for displacement by sliding and/or skidding. In this manner, and as is shown in Figure 4, the vessel can be coupled to the offshore structure (3) and the vertical relative displacement thereof with respect to said structure is initially allowed, which generates an impact of waves against the vessel during the steps of approaching and coupling to the offshore structure (3). Likewise, in this embodiment, the coupling system (8) comprises means for blocking and/or limiting vertical displacement. As a result of said means for blocking, it is possible to fix the position of the vessel in a manner that is integral with the offshore structure (3) and to give way to the operations to be performed therein by operators. Alternatively or complementarily, the coupling system (8) can comprise also means for blocking and/or limiting lateral displacement and at least one rotational movement from among the roll, pitch, and yaw of said vessel with respect to the offshore structure (3). The means for blocking and/or limiting displacement typically comprise tightening, engaging, suction, clamping means, as well as any other mechanical, hydraulic, pneumatic and/or electromagnetic means.

In a preferred embodiment of the invention, the coupling system (8) comprises an articulated ring (9), configured for opening and closing around at least one element of the offshore structure (3). An example of said ring (9) is shown in Figures 1-4. Likewise, in different embodiments of the invention, the ring (9) can comprise an active guide subsystem, configured for tightening said ring (9) against the offshore structure (3).

As described hereinabove, the vessel of the invention is advantageously configured such that the ballast control system of the hull (1) and the system (8) for coupling the vessel to the offshore structure (3) are configured in a cooperating manner, such that:
- in at least a first working position of the vessel, the hull (1) adopts an above-water state in which the coupling system (8) is not coupled to the offshore structure (3) and,
- in at least a second working position of the vessel, the hull (1) adopts a submerged state in which the coupling system (8) is coupled to the offshore structure (3).

As a result of the cooperation between the ballast control system and the coupling system (8), it is assured that the vessel can work, in its first position, in the above-water state and be displaced like a conventional ship, with maximum buoyancy. This state is the one that will preferably be used for the vessel to travel from the port to the offshore structure (3), and vice versa. Likewise, in its second position, the vessel can work integrally coupled to the offshore structure (3), and at the same time with its hull (1) arranged in a submerged state. As a result of this configuration, the vessel will experience a substantially smaller impact of waves than what other vessels of the state of the art experience, given that the only elements exposed to said waves in the mentioned second position will be the support elements (5, 5'), with the hull (1) belonging below the waterline (2). At the end of the operations performed in the offshore structure (3), the hull (1) returns to its above-water position and the coupling system (8) is decoupled from said structure (3), such that the vessel can again travel in the first working position back to the port or to a second offshore structure in which new operations will be performed.

In a preferred embodiment of the invention, the ballast control system of the vessel can comprise safety means (not shown in the figures), for preventing the ballasting of the hull (2) if the coupling system (8) is decoupled from the offshore structure (3). Likewise, the coupling system (8) can be equipped with safety means for preventing the vessel from decoupling from the offshore structure (3) when the hull (1) is in a submerged state. The mentioned safety means therefore assure that the coupling and decoupling operations of the vessel to/from the offshore structure (3) are performed in a suitable order that does not jeopardize the stability and/or buoyancy of the vessel, providing enhanced safety to its occupants than the other known alternatives do.

In different embodiments of the invention, the offshore structure (3) to which the vessel is coupled is an offshore wind tower. More preferably, said wind tower has a substantially constant section and/or presents a polygonal section. Likewise, in other embodiments of the invention, the offshore structure (3) can be a structure supported, moored and/or anchored to the seabed, or can be a semi-submerged floating structure. Additionally, the offshore structure can be of the self-propelling or towable type.

Another aspect of the present invention relates to a method for the installation, service, or maintenance of offshore structures (3), using a vessel according to any of the embodiments described herein.

A preferred embodiment of said method is illustrated in Figures 5a-5g. In this embodiment, the following steps are carried out in any order that is technically possible:
a) displacing the vessel, adopting a first working position with the hull (1) above-water and the coupling system (8) decoupled, to the offshore structure (3);
b) coupling the vessel to the offshore structure (3) by means of the operation of the coupling system (8);
c) ballasting the hull (1), sinking it until adopting a second working position with said hull (1) in a submerged state;
d) performing operations for the installation, service and/or maintenance of the offshore structure (3) from the working platform (4);
e) deballasting the hull (1) until it again adopts an above-water state;
f) releasing the coupling structure (8) from the offshore structure (3), returning the vessel to the first working position;
g) withdrawing the vessel from the offshore structure (3).

## Claims

1. An operations vessel for the maintenance, installation and/or disassembly of offshore structures (3), comprising:
- at least one hull (1) that can be submerged equipped with ballast means, wherein said ballast means are connected to a control system in order to provide to said hull (1), in an adjustable manner, at least, an above-water state and a submerged state;
- at least one working platform (4) supported on the hull (1) by means of one or more support elements (5, 5') such that, in one or more working positions of the vessel, when said hull (1) adopts a submerged state, said working platform (4) remains above-water and said support elements (5, 5') are partially submerged;
- at least one system (8) for coupling to an offshore structure (3), wherein said coupling system (8) can adopt, at least, a state in which it is coupled to said offshore structure (3) and a state in which it is not coupled to said offshore structure (3);
said vessel being **characterized in that** the control system and the coupling system (8) are configured in a cooperating manner, such that:
- in at least a first working position of the vessel, the hull (1) adopts an above-water state in which the coupling system (8) is not coupled to the offshore structure (3) and,
- in at least a second working position of the vessel, the hull (1) adopts a submerged state in which the coupling system (8) is coupled to the offshore structure (3).

2. The vessel according to the preceding claim, wherein the coupling system (8) comprises safety means adopted for preventing the vessel from decoupling from the offshore structure (3) if the hull (1) is in a submerged state.

3. The vessel according to any of the preceding claims, wherein the coupling system (8) comprises means for blocking and/or limiting lateral displacement and at least one rotational movement from among the roll, pitch, and yaw of said vessel with respect to the offshore structure (3).

4. The vessel according to any of the preceding claims, wherein the coupling system (8) comprises means for vertical displacement of said vessel with respect to the offshore structure (3).

5. The vessel according to the preceding claim, wherein the means for vertical displacement comprise
- means for displacement by sliding and/or skidding; and/or
- means for blocking and/or limiting said displacement.

6. The vessel according to any of the preceding claims, wherein the coupling system (8) comprises an articulated ring (9) configured for opening and closing around at least one element of the offshore structure (3).

7. The vessel according to any of the preceding claims, comprising elevating means for adjustably elevating the working platform (4) with respect to the hull (1).

8. A method for the installation, service, maintenance, and/or disassembly of offshore structures (3), using a vessel according to any of the preceding claims, and
**characterized in that** it comprises performing the following steps in any order that is technically possible:
a) displacing the vessel, adopting a first working position with the hull (1) above-water and the coupling system (8) decoupled, to the offshore structure (3);
b) coupling the vessel to the offshore structure (3) by means of the operation of the coupling system (8);
c) ballasting the hull (1), sinking it until adopting a second working position with said hull (1) in a submerged state;
d) performing operations for the installation, service and/or maintenance of the offshore structure (3) from the working platform (4);
e) deballasting the hull (1) until it again adopts an above-water state;
f) releasing the coupling structure (8) from the offshore structure (3), returning the vessel to the first working position;
g) withdrawing the vessel from the offshore structure (3).

9. The method according to the preceding claim, comprising the additional step of adjusting the elevation of the working platform (4) with respect to the hull (1).

10. The method according to any of claims 8-9, wherein the vessel comprises a crane (6) and wherein the method comprises the additional step of deploying, retracting and/or operating said crane (6), during step d).

11. The method according to the preceding claim, wherein the crane (6) comprises, at least, a deployed position and a stowed position, wherein the length of the jib of said crane (6) in the stowed position is reduced with respect to the deployed position, and wherein the height of the center of gravity of the crane (6) in the stowed position is less than its height in the deployed position.

12. The method according to the preceding claim, wherein the crane (6) is stowed at least during step a) and deployed at least during step d).

13. The method according to any of claims 8-12, wherein during step d), the vertical position of the vessel is fixed by means of the coupling system (8).

14. The method according to any of claims 8-13, wherein during step d), the working platform (4) is elevated to a minimum height with respect to the water level (2) greater than half the maximum significant wave height intended and/or allowed for the installation, service, or maintenance of the offshore structure (3).

15. The method according to any of claims 8-14, wherein during step d), the hull (1) is submerged to a minimum depth with respect to the water level (2) greater than half the maximum significant wave height intended and/or allowed for the installation, service, or maintenance of the offshore structure (3).
